# EUROPEAN PATENT SPECIFICATION

(11) **EP 3 178 635 B1**
(45) Date of publication and mention of the grant of the patent: **30.10.2019**
(21) Application number: 15199470.4
(22) Date of filing: 11.12.2015
(51) Int. Cl.: B29C 65/34, B29K 105/06, B29K 307/04

(54) **METHOD FOR WELDING TOGETHER A FIRST OBJECT AND A SECOND OBJECT**
VERFAHREN ZUM ZUSAMMENSCHWEISSEN EINES ERSTEN OBJEKTS UND EINES ZWEITEN OBJEKTS
PROCÉDÉ PERMETTANT DE SOUDER UN PREMIER OBJET ET UN SECOND OBJET ENSEMBLE

(43) Date of publication of application: 14.06.2017
(73) Proprietor: Airbus Operations GmbH, 21129 Hamburg (DE)
(72) Inventor: Linde,Peter, Dr., 21129 Hamburg (DE)
(74) Representative: Frenkel, Matthias Alexander

(56) References cited:
- CN-B- 103 333 621
- US-A1- 2011 094 671
- US-A1- 2012 103 509
- US-A1- 2013 062 902
- US-A1- 2013 087 278
- DUBE ET AL: "Current leakage prevention in resistance welding of carbon fibre reinforced thermoplastics", COMPOSITES SCIENCE AND TECHNOLOGY, ELSEVIER, UK, vol. 68, no. 6, 13 March 2008 (2008-03-13) , pages 1579-1587, XP022527277, ISSN: 0266-3538, DOI: 10.1016/J.COMPSCITECH.2007.09.008
- MCKNIGHT S H ET AL: "SCALING ISSUES IN RESISTANCE-WELDED THERMOPLASTIC COMPOSITE JOINTS", ADVANCES IN POLYMER TECHNOLOGY, WILEY AND SONS, HOBOKEN, NJ, US, vol. 16, no. 4, 21 December 1997 (1997-12-21), pages 279-295, XP000727181, ISSN: 0730-6679, DOI: 10.1002/(SICI)1098-2329(199711)16:4<279::A ID-ADV3>3.0.CO;2-S

## Description

The present invention relates to a method for welding together a first object and a second object.

In aircraft construction efforts are being made increasingly to use, as load-bearing components, components that are made entirely or partially of fiber-reinforced composite materials, for example carbon fiber-reinforced plastics (CFRP). One type of carbon fiber-reinforced plastic is carbon fiber-reinforced thermoplastic (thermoplastic CFRP), which comprises thermoplastic resin having thermoplastic properties. Compared to other types of carbon fiber-reinforced plastic materials (e.g., thermoset CFRP), thermoplastic CFRP has a plurality of advantages, in particular with regard to its curing process.

In particular due to these advantages, thermoplastic CFRP is recently increasingly used, e.g., in aircraft construction. However, some aspects regarding the processing of thermoplastic CFRP are still challenging. For example, until now the most common way of joining two thermoplastic CFRP objects is by so-called "co-consolidation" in an autoclave, i.e., a large pressurized heat oven, that consumes much energy and requires a long process time. Improvement has been achieved in recent years by better thermoplastic resins requiring a scaled down version of the autoclave, i.e. TP-ovens. Separate welding processes for thermoplastic parts have also been developed, but have not yet reached an optimum. They typically all require external heating sources, such as: torches, infrared radiation, on ultrasonic devices applying mechanical vibrations. Further, known welding processes for thermoplastic objects sometimes require separate induction circuits or electrical circuits that need to be attached to the objects to be welded in order to cause heating.

US 2011/094671 A1 discloses a method for welding together a first object and a second object, comprising: applying a layer of carbon nanotubes onto a surface of the first object; bringing the first object and the second object into contact, such that the layer of carbon nanotubes on the surface of the first object is in contact with a surface of the second object; applying a voltage to the layer of carbon nanotubes, such that an electrical current flows through the layer of carbon nanotubes, wherein material of the first object adjacent to the layer of carbon nanotubes and material of the second object adjacent to the layer of carbon nanotubes is heated and melted by the electrical current and thereby welded together.

US 2013/087278 A1 discloses the using of carbon nanotubes to produce a thin film or buckypaper, also referred to as carbon nanotube membrane, which is soaked with epoxy resin or a carbon nanotube-epoxy resin composite adhesive, and then placed between the joining edges of components, where after an electric current is passed through to heat up the carbon nanotube membrane. This leads to the curing temperature of the epoxy resin or carbon nanotube-epoxy resin composite adhesive, thereby hardening the epoxy resin or carbon nanotube-epoxy resin composite adhesive to achieve bonding.

US 2013/062902 A1 discloses a method for producing an inner cladding part for vehicles by lamination of a first, preferably flexible material layer, having an upper side and an underside, onto a preferably dimensionally stable carrier, having a preferably three-dimensional surface contour of the carrier, with a thermally activatable adhesive applied to the underside of the material layer and/or the surface contour of the carrier. Carbon nanotubes, forming a heating device, are in contact with the adhesive at least in one sub-region. The method includes heating the adhesive in the sub-region by applying a voltage to the carbon nanotubes, as a result of which the adhesive is activated, and compressing the material layer and the carrier.

CN 103 333 621 B discloses a bucky paper electrocaloric effect-based fusion method and a composite material thereof. The fusion method comprises following steps: bucky paper is contacted with a base material used for hot melting, and then is electrified and heated, and cooled and shaped. The composite material prepared by using the fusion method has a fusion structure of the base material and bucky paper. US 2012/103509 A1 discloses a method for bonding members. First, a first member having a first surface and a second member having a second surface are provided. A carbon nanotube structure is formed and is located between the first member and the second member, and the carbon nanotube structure contacting the first surface and the second surface. Then the carbon nanotube structure is exposed to electromagnetic waves.

The present invention is directed to the object of providing a method for welding together a first object and a second object, which reduces the aforementioned problems and which is simplified compared to known welding methods.

The above-mentioned object is achieved by a method for welding together a first object and a second object according to claim 1.

Advantageous embodiments are defined in the dependent claims.

According to a first aspect of the disclosure, a method for welding together a first object and a second object comprises applying a layer of carbon nanotubes onto a surface of the first object and applying a further layer of carbon nanotubes onto a surface of the second object. The method further comprises bringing the first object and the second object into contact, such that the layer of carbon nanotubes on the surface of the first object is brought into contact with the further layer of carbon nanotubes on the surface of the second object. The method further comprises applying a voltage to the layer of carbon nanotubes, such that an electrical current flows through the layer of carbon nanotubes and through the further layer of carbon nanotubes, wherein material of the first object adjacent to the layer of carbon nanotubes and material of the second object adjacent to the further layer of carbon nanotubes is heated and melted by the electrical current and thereby welded together.

The first object and the second object may be objects of any desired material or shape. The shape and/or material of the first object does not have to be identical to the shape and/or material of the second object. In particular, the first object and the second object may each be formed of one or a plurality of layers of carbon fiber-reinforced thermoplastic, i.e., thermoplastic carbon fiber-reinforced plastic (thermoplastic CFRP). Applying a layer of carbon nanotubes (CNTs) is not limited to a single layer of carbon nanotubes. A plurality of sub-layers of carbon nanotubes may be applied, which, in their entirety, are considered as the layer of carbon nanotubes. Thus, a plurality of carbon nanotubes may be stacked above each other in the layer of carbon nanotubes. The layer of carbon nanotubes may comprise long carbon nanotubes, which are applied in a grid-like structure. The layer of carbon nanotubes may be applied such that the individual carbon nanotubes overlap each other and thereby form a continuous layer of electrically interconnected carbon nanotubes. The surface of the first object and the surface of the second object may each be flat surfaces. Further, the surface of the first object may have a curvature, whereas the surface of the second object has a curvature corresponding to the curvature of the surface of the first object.

In the step of bringing the first object and the second object into contact, the surface of the first object and the surface of the second object may be pressed together by a predefined pressure. This pressure may be maintained during the step of applying a voltage to the layer of carbon nanotubes.

In the step of applying a voltage to the layer of carbon nanotubes, a control can be carried out, such that a predefined voltage is applied. Further, control can be carried out, such that a predefined current flows through the layer of carbon nanotubes. The voltage may be applied for a predefined amount of time. During the step of applying a voltage to the layer of carbon nanotubes, the first object and the second object may be pressed together. The material of the first object and/or the material of the second object may be thermoplastic material. In particular, the material of the first object and/or the material of the second object may be thermoplastic material used as thermoplastic resin material in the respective object made of thermoplastic CFRP. After the step of applying a voltage to the layer of carbon nanotubes, a cooling step may follow in order to harden the melted material.

By applying the further layer of carbon nanotubes onto the surface of the second object, both surfaces that are brought into contact are provided with an associated layer of carbon nanotubes. In the step of bringing the first object and the second object into contact, the two layers of carbon nanotubes may conjoin to one layer of carbon nanotubes between the two objects. The carbon nanotubes in the layer of carbon nanotubes as well as the carbon nanotubes in the further layer of carbo nanotubes may be homogeneously distributed over the entire surface of the first object and/or the second object, respectively. After the first object and the second object have been brought into contact, the carbon nanotubes in the layer of carbon nanotubes or in the conjoined layer of carbon nanotubes may be arranged such that an electric current may flow through the layer of carbon nanotubes or through the conjoined layer of carbon nanotubes from one end of the respective layer to another, opposite end of the respective layer.

The material of the first object and the material of the second object may be heated by remote Joule heating. The material of the first object and the material of the second object adjacent to the layer of carbon nanotubes may be heated such, that a current flow is generated in the carbon nanotubes of the layer of carbon nanotubes, wherein this current couples to vibrational modes of surrounding material. Atoms of the surrounding material may be caused to oscillate, which causes a heating of the material. In case the heating reaches a particular temperature (a melting temperature of the respective material), the material will start melting.

At least one of the first object and the second object may comprise carbon fiber-reinforced plastic. The carbon fiber-reinforced plastic (CFRP) may be provided in one layer or in a plurality of layers stacked upon each other. The carbon fiber-reinforced plastic may comprise a plurality of carbon fibers embedded in a matrix of plastic resin. The first object and/or the second object may each either be entirely formed of carbon fiber-reinforced plastic or comprise parts which are made of carbon fiber-reinforced plastic.

At least the one of the first object and the second object may comprise carbon fiber-reinforced thermoplastic. In other words, the one of the first object and the second object may comprise CFRP having thermoplastic properties. The used CFRP may comprise a resin having thermoplastic properties.

The layer of carbon nanotubes may be applied by using a solvent comprising a plurality of carbon nanotubes. The layer of carbon nanotubes may be applied by pouring the solvent under controlled conditions. The solvent may be a solvent comprising a plurality of long carbon nanotubes. The layer of carbon nanotubes may also be applied by spraying the solvent onto the surface of the first object. Further, other types of application of the solvent are possible, wherein the solvent is applied in a controlled manner, such that a uniform layer of solvent is achieved on the surface on the first object and, alternatively, on the surface of the second object.

The carbon nanotubes in the layer of carbon nanotubes may be arranged in a grid-like structure. In the grid-like structure, the individual carbon nanotubes may be arranged such that the carbon nanotubes overlap each other and thereby form an electrical connection between them. Although not every single carbon nanotube needs to overlap another carbon nanotube, the carbon nanotubes in the grid may be arranged such that an electrical connection between one end of the layer of carbon nanotubes to an opposite end of the layer of carbon nanotubes is established. The layer of carbon nanotubes may be arranged such that the grid-like structure homogeneously covers the surface of the first object. The layer of carbon nanotubes may be arranged such that it extends up to at least two edges of the first object.

The method may further comprise, during the step of applying the voltage, measuring a temperature of the material of the first object and/or of the material of the second object. The method may further comprise controlling the applied voltage based on the measured temperature. The temperature may be measured at one particular point at the first object or the second object. For example, the temperature may be measured at an interface between the first object and the second object, i.e., where the first object contacts the second object. For example, the temperature may be measured in the layer of carbon nanotubes. Further, not only one but a plurality of temperatures may be measured. For example, a two-dimensional thermal image may be generated for an entire contact surface of the first object and the second object. The applied voltage may be controlled such that the measured temperature remains substantially constant. For example, a feedback loop may be used. In case a plurality of temperatures is measured, the applied voltage may be controlled such that each measured temperature is higher than a particular threshold temperature. The measured temperature may be fed into a control unit in the form of an electrical signal. The electrical signal may be used by the control unit in order to control the applied voltage based on the measured temperature.

A thermal camera may be used for measuring the temperature. The thermal camera may be used, e.g., for generating a two-dimensional thermal image. The two-dimensional thermal image may show a temperature distribution of the entire contact surface between the first object and the second object.

Preferred embodiments of the invention are now described in greater detail with reference to the appended schematic drawings, wherein
- Fig. 1: shows the principle of remote Joule heating, whereas, exemplarily, one single carbon nanotube is embedded in surrounding material and a current is flowing through the carbon nanotube;
- Fig.2: shows a step of applying a layer of carbon nanotubes onto a surface of a first object;
- Fig. 3: shows a step of bringing the first object and a second object into contact; and
- Fig. 4: shows an apparatus for welding together the first object and the second object, during a step of applying a voltage to the layer of carbon nanotubes, such that an electrical current flows through the layer of carbon nanotubes and such that the first object and the second object are welded together.

Although the following disclosure describes welding of two objects together, wherein each of these objects comprises at least one layer of thermoplastic CFRP, it should be appreciated by those skilled in the art that the invention is not limited to this material. Any kind of suitable materials may be welded together by the method described herein, as long as these materials are suitable for being welded by heat. Further, only one of the two objects that are welded together may comprise thermoplastic CFRP, whereas the other object may be made of another suitable material. Further, although the present disclosure describes a welding process with reference to the physical phenomenon called "remote Joule heating", other physical principles, such as direct (or classical) Joule heating, may be used for generating heat at a contact surface between the two objects.

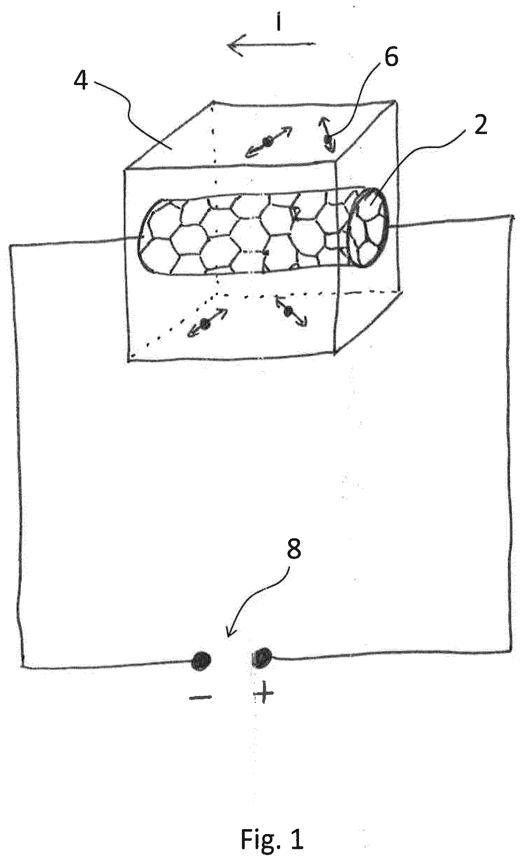

Fig. 1 schematically shows the principle of remote Joule heating by a carbon nanotube 2. The phenomenon of remote Joule heating was discovered by Kamal H.

Baloch *et al* at the University of Maryland in 2012. It has been discovered that if a carbon nanotube 2 is placed under electric current I and is inserted in a surrounding material 4, the electric current I in the carbon nanotube 2 can couple to the vibrational modes of the surrounding material 4, heating it remotely. More precisely, atoms 6 of the surrounding material 4 start to vibrate or oscillate, as indicated by arrows in Fig. 1. Therefore, by applying a voltage, which leads to an electrical current I through the carbon nanotube 2, material 4 surrounding the carbon nanotube 2 can be "remotely" heated. The phenomenon of remote Joule heating significantly differs from the typically expected principle of (direct) Joule heating, where it is assumed that electrons collide with the atoms of a conductor, generating heat locally and only in regions of non-zero current density. Although the present disclosure focuses on the phenomenon of remote Joule heating, the surrounding material 4 may also be heated by the current I in the carbon nanotube 2 in case the carbon nanotube 2 should exhibit direct (or classical) Joule heating. In this case, the heat is transferred from the carbon nanotube 2 to the surrounding material 4.

A voltage source 8 is used to apply a particular voltage U, which leads to a predetermined current I in the carbon nanotube 2. For this, the current I in the carbon nanotube 2 may be monitored by a current measurement device (not shown) and the voltage U of the voltage source 8 may be controlled accordingly.

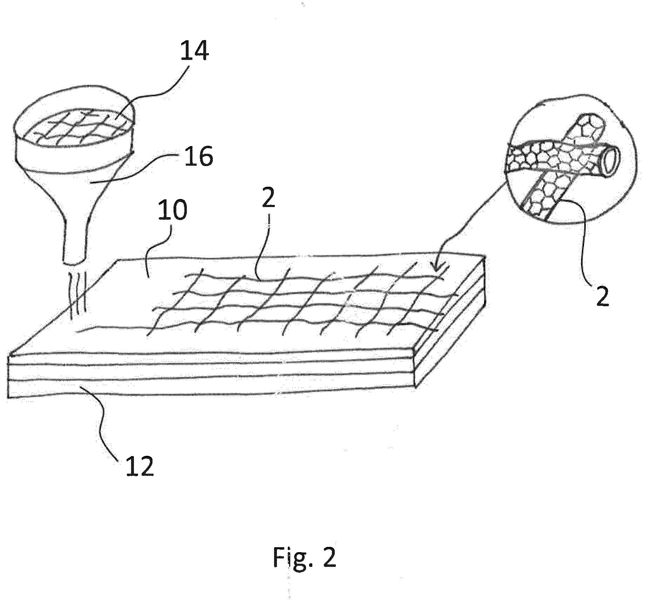

Fig. 2 shows a step of applying a layer of carbon nanotubes 2 onto a surface 10 of a first object 12. In the described embodiment, the first object 12 consists of thermoplastic CFRP. For the sake of simplicity, the first object 12 is shown as a platelike object having one large top surface 10. In the shown example, the surface 10 of the first object 12 shall be welded to a corresponding surface of a second object.

In the first step shown in Fig. 2, a layer of carbon nanotubes 2 is applied on the surface 10 of the first object 12. As shown in Fig. 2, a carbon nanotube grid is applied on the surface 10 of the first object 12, by pouring a solvent 14 containing long carbon nanotubes 2 onto the surface 10 under controlled conditions. For this step, a dispensing device 16 may be used, which is configured to apply a homogeneous layer of carbon nanotubes 2 onto the surface 10 of the first object 12.

As shown in Fig. 2, the entire surface 10 of the first object 12, which shall later represent a contact surface with regard to the second object, is covered with carbon nanotubes 2 in a grid-like structure. It is to be noted, that the grid-like structure shown in Fig. 2 is only a schematic representation and that the layer of carbon nanotubes 2 may be much denser and the carbon nanotubes may be much smaller than shown in Fig. 2. Further, the individual carbon nanotubes 2 do not need to have a particular orientation. It is rather desirable that the layer of carbon nanotubes 2 covers the entire surface 10 to be welded. Further, the individual carbon nanotubes 2 overlap each other, as shown in the magnified representation in Fig. 2. By these overlapping carbon nanotubes 2, an electrical connection is established from one end of the surface 10 to another end of the surface 10 (in the representation of Fig. 2, for example, from left to right).

Further, the same process step as shown in Fig. 2 may be used for depositing a layer of carbon nanotubes 2 onto a surface of the second object that shall be welded together with the first object 12. However, this step is optional and also a second object may be used, which has no layer of carbon nanotubes 2 deposited on it.

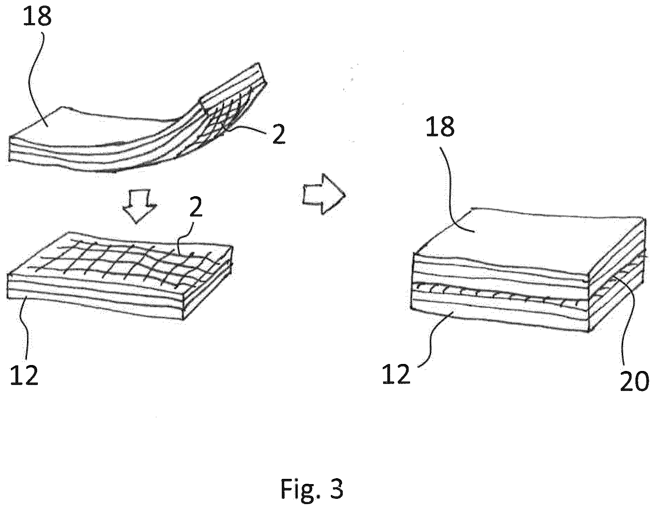

Fig. 3 shows a step of bringing the first object 12 and the second object 18 into contact. As shown in the left part of Fig. 3, the first object 12 comprises a layer of carbon nanotubes 2 on a surface 10 thereof. The layer of carbon nanotubes 2 has been applied, for example, by using the method step described with reference to Fig. 2.

Further, also the second object 18 has a surface, on which a layer of carbon nanotubes 2 has been applied. However, the layer of carbon nanotubes 2 on the second object 18 is optional. In the described example, both the first object 12 and the second object 18 are made of thermoplastic CFRP. As shown in Fig. 3, the first object 12 and the second object 18 are brought into contact, such that the layer of carbon nanotubes 2 on the surface 10 of the first object 12 is in contact with the surface of the second object 18, which shall be welded to the surface 10 of the first object 12. After bringing the first object 12 and the second object 18 into contact, a contact surface 20 is formed between the first object 12 and the second object 18. At this contact surface 20, the layer of carbon nanotubes 2 of the first object 12 is present. In case also a layer of carbon nanotubes 2 has been applied onto the second object 18, the two layers of carbon nanotubes 2 conjoin with each other and form a conjoined layer of carbon nanotubes 2 at the contact surface 20. Pressure may be applied during bringing the two objects 12 and 18 into contact, wherein this pressure may be maintained during the next step of applying a voltage.

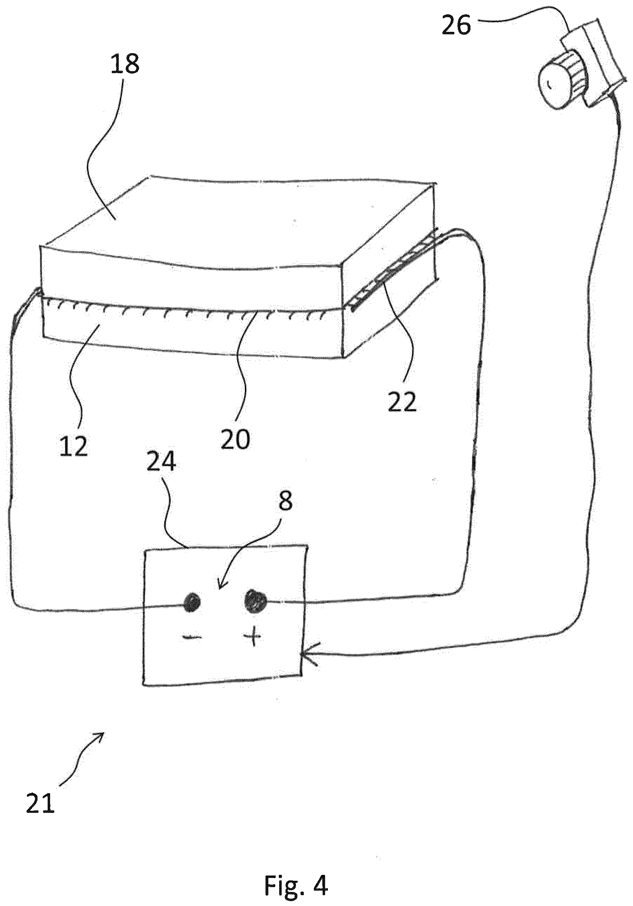

Fig. 4 shows a schematic representation of a step of applying a voltage to the layer of carbon nanotubes 2, such that an electrical current flows through the layer of carbon nanotubes 2. For carrying out this step of applying the voltage, an apparatus 21 for welding together the first object 12 and the second object 18 is used. Fig. 4 shows the first object 12 and the second object 18 stacked together, as it is the result of the step shown in Fig. 3. The layer of carbon nanotubes 2 in the contact layer 20 is electrically contacted on two opposite sides of the contact layer 20 by respective contact units 22 of the apparatus 21. The layer of carbon nanotubes 2 has been applied between the first object 12 and the second object 18, such it can be contacted by the contact unit 22. For example, the layer of carbon nanotubes 2 may overlap over the edge of the contact surface 20 and the first object 12 and/or the second object 18. In that case, the layer of carbon nanotubes 2 can be contacted from outside. In case one of the surfaces of the first object 12 or the second object 18 is larger than the surface of the other object, the layer of carbon nanotubes 2 can extend over this larger surface in order to be connectable by the connecting unit 22 when the two objects 12 and 18 have been brought into contact. Further, the connecting unit 22 may be deposited between the first object 12 and the second object 18 before the step of bringing the two objects together, such that the connecting unit 22 contacts the layer of carbon nanotubes 2 inside the combined objects 12 and 18.

A voltage is applied to the layer of carbon nanotubes 2 by a control unit 24 of the apparatus 21. The control unit 24 comprises a voltage source 8. The voltage may be controlled by the control unit 24 such that a constant, predefined current I flows through the layer of carbon nanotubes 2. A temperature measuring device 26 for measuring a temperature T of the material of the first object 12 and/or of the material of the second object 18 may be provided. In the example shown in Fig. 4, this temperature measuring device 26 of the apparatus 21 is a thermal camera 26 configured to output an electrical signal representative of a two-dimensional thermal image. The thermal image may indicate a temperature distribution within the contact surface 20. Thus, it is possible to monitor the temperature within the two combined objects 12 and 18. A temperature rise is caused by the current flowing through the layer of carbon nanotubes 2.

According to the principle of remote Joule heating (see above) the current flowing through the layer of carbon nanotubes 2 causes the material surrounding the carbon nanotubes 2 to be heated. This heating is observed by the thermal camera 26 in the form of temperature values. The electrical signal output by the thermal camera 26 is input into the control device 24 of the apparatus 21 via a respective input interface (not shown). This makes it possible for the control unit 24 to control the applied voltage U and/or the flowing current I based on a measured temperature T. For example, a feedback loop may be used in the control unit 24. For example, the control unit 24 may carried out control such that it is ensured that the temperature T at the contact surface 20 is within a predetermined temperature range. The predetermined temperature range may be set such that the temperature is high enough to melt the material of the first object 12 and the second object 18 at the contact surface 20, but not too high in order to not burn the surrounding material.

For carrying out the control of the control unit 24, a processor (for example, a CPU) may be used with a respective programming by software and/or by hardware.

As shown in Fig. 4, the layer of carbon nanotubes 2 may be contacted by using one large contact unit 22 over an entire length of the layer of carbon nanotubes 2. Alternatively, the layer of carbon nanotubes 2 may be contacted by using a contact unit 22 that is configured to apply different voltage values U to different positions of the layer of carbon nanotubes 2. Thus, certain regions of the layer of carbon nanotubes 2 may be individually supplied with a predefined current value I in order to individually control a temperature T in this region.

As described above, the contact surface 20 is heated up by the effect of remote Joule heating, which causes material adjacent to the layer of carbon nanotubes 2 to melt. Material of the first object 12 and of the second object 18 melts and conjoins with each other, which welds the first object 12 and the second object 18 together. After a step of cooling, the material is hardened again and the first object 12 and the second object 18 are welded together.

The above-described technique provides a method and an apparatus for welding together a first object and a second object without requiring an external heating source or an external vibration source, and without connecting any magnetic circuits or complex electric circuits. Thus, the presented technique is cheap, easy to use and convenient, compared to welding techniques of the prior art.

Although the above description is given with reference to the appended figures 1 to 4, it should be appreciated that the present disclosure is not limited to these specific embodiments. For example, a different material may be used for the first object and/or the second object. Further, the first object and the second object (and, in particular, their surfaces) are not limited to the shape shown in the figures. Further, a plurality of layers of carbon nanotubes may be formed between the first object and the second object. This conjoined layer of carbon nanotubes may be contacted in any desired way suitable for letting a current flow through the layer of carbon nanotubes.

## Claims

1. A method for welding together a first object (12) and a second object (18), comprising:
applying a layer of carbon nanotubes (2) onto a surface (10) of the first object (12);
applying a further layer of carbon nanotubes (2) onto a surface of the second object (18);
bringing the first object (12) and the second object (18) into contact, such that the layer of carbon nanotubes (2) on the surface (10) of the first object (12) is brought into contact with the further layer of carbon nanotubes (2) on the surface of the second object (18);
applying a voltage to the layer of carbon nanotubes (2), such that an electrical current flows through the layer of carbon nanotubes (2) and through the further layer of carbon nanotubes (2), wherein material of the first object (12) adjacent to the layer of carbon nanotubes (2) and material of the second object (18) adjacent to the further layer of carbon nanotubes (2) is heated and melted by the electrical current and thereby welded together.

2. The method according to claim 1, wherein the material of the first object (12) and the material of the second object (18) is heated by remote Joule heating.

3. The method according to any one of claims 1 to 2, wherein at least one of the first object (12) and the second object (18) comprises carbon fiber-reinforced plastic.

4. The method according to claim 3, wherein at least the one of the first object (12) and the second object (18) comprises carbon fiber-reinforced thermoplastic.

5. The method according to any one of claims 1 to 4, wherein the layer of carbon nanotubes (2) is applied by using a solvent (14) comprising a plurality of carbon nanotubes (2).

6. The method according to any one of claims 1 to 5, wherein the carbon nanotubes (2) in the layer of carbon nanotubes (2) are arranged in a grid-like structure.

7. The method according to any one of claims 1 to 6, further comprising:
during the step of applying the voltage, measuring a temperature of the material of the first object (12) and/or of the material of the second object (18); and
controlling the applied voltage based on the measured temperature.

8. The method according to claim 7, wherein a thermal camera (26) is used for measuring the temperature.

## Patentansprüche

1. Verfahren zum Zusammenschweißen eines ersten Objekts (12) und eines zweiten Objekts (18), umfassend:
Aufbringen einer Schicht aus Kohlenstoffnanoröhrchen (2) auf eine Oberfläche (10) des ersten Objekts (12);
Aufbringen einer weiteren Schicht aus Kohlenstoffnanoröhrchen (2) auf eine Oberfläche des zweiten Objekts (18);
In-Kontakt-Bringen des ersten Objekts (12) und des zweiten Objekts (18), so dass die Schicht aus Kohlenstoffnanoröhrchen (2) auf der Oberfläche (10) des ersten Objekts (12) in Kontakt mit der weiteren Schicht der Kohlenstoffnanoröhrchen (2) auf der Oberfläche des zweiten Objekts (18) gebracht wird;
Anlegen einer Spannung an die Schicht aus Kohlenstoffnanoröhrchen (2), so dass ein elektrischer Strom durch die Schicht aus Kohlenstoffnanoröhrchen (2) und durch die weitere Schicht der Kohlenstoffnanoröhrchen (2) hindurch fließt, wobei Material des ersten Objekts (12) neben der Schicht der Kohlenstoffnanoröhrchen (2) und Material des zweiten Objekts (18) neben der weiteren Schicht der Kohlenstoffnanoröhrchen (2) durch den elektrischen Strom erhitzt und geschmolzen werden und dadurch miteinander verschweißt werden.

2. Verfahren nach Anspruch 1, wobei das Material des ersten Objekts (12) und das Material des zweiten Objekts (18) durch Joulesche Erhitzung aus der Ferne erhitzt werden.

3. Verfahren nach einem der Ansprüche 1 bis 2, wobei mindestens eines von dem ersten Objekt (12) und dem zweiten Objekt (18) kohlefaserverstärkten Kunststoff umfasst.

4. Verfahren nach Anspruch 3, wobei mindestens eines von dem ersten Objekt (12) und dem zweiten Objekt (18) kohlefaserverstärkten Thermoplasten umfasst.

5. Verfahren nach einem der Ansprüche 1 bis 4, wobei die Schicht aus Kohlenstoffnanoröhrchen (2) aufgebracht wird, indem ein Lösungsmittel (14) verwendet wird, das eine Vielzahl von Kohlenstoffnanoröhrchen (2) umfasst.

6. Verfahren nach einem der Ansprüche 1 bis 5, wobei die Kohlenstoffnanoröhrchen (2) in der Schicht aus Kohlenstoffnanoröhrchen (2) in einer gitterartigen Struktur angeordnet sind.

7. Verfahren nach einem der Ansprüche 1 bis 6, das ferner umfasst:
Messen einer Temperatur des Materials des ersten Objekts (12) und/oder des Materials des zweiten Objekts (18) während des Schrittes des Anlegens der Spannung; und
Steuern der angelegten Spannung basierend auf der gemessenen Temperatur.

8. Verfahren nach Anspruch 7, wobei zum Messen der Temperatur eine Wärmekamera (26) verwendet wird.

## Revendications

1. Procédé destiné à souder ensemble un premier objet (12) et un deuxième objet (18), comprenant :
l'application d'une couche de nanotubes de carbone (2) sur une surface (10) du premier objet (12) ;
l'application d'une autre couche de nanotubes de carbone (2) sur une surface du deuxième objet (18) ;
la mise en contact du premier objet (12) et du deuxième objet (18), de telle sorte que la couche de nanotubes de carbone (2) sur la surface (10) du premier objet (12) est mise en contact avec l'autre couche de nanotubes de carbone (2) sur la surface du deuxième objet (18) ;
l'application d'une tension à la couche de nanotubes de carbone (2), de telle sorte qu'un courant électrique circule à travers la couche de nanotubes de carbone (2) et à travers l'autre couche de nanotubes de carbone (2), un matériau du premier objet (12) au voisinage de la couche de nanotubes de carbone (2) et un matériau du deuxième objet (18) au voisinage de l'autre couche de nanotubes de carbone (2) étant chauffés et fondus par le courant électrique et ainsi soudés ensemble.

2. Procédé selon la revendication 1, dans lequel le matériau du premier objet (12) et le matériau du deuxième objet (18) sont chauffés par chauffage à distance par effet Joule.

3. Procédé selon l'une quelconque des revendications 1 à 2, dans lequel au moins un objet entre le premier objet (12) et le deuxième objet (18) comprend un plastique renforcé de fibres de carbone.

4. Procédé selon la revendication 3, dans lequel l'au moins un objet entre le premier objet (12) et le deuxième objet (18) comprend un thermoplastique renforcé de fibres de carbone.

5. Procédé selon l'une quelconque des revendications 1 à 4, dans lequel la couche de nanotubes de carbone (2) est appliquée au moyen d'un solvant (14) comprenant une pluralité de nanotubes de carbone (2).

6. Procédé selon l'une quelconque des revendications 1 à 5, dans lequel les nanotubes de carbone (2) dans la couche de nanotubes de carbone (2) sont disposés dans une structure en forme de grille.

7. Procédé selon l'une quelconque des revendications 1 à 6, comprenant en outre :
pendant l'étape d'application de la tension, la mesure d'une température du matériau du premier objet (12) et/ou du matériau du deuxième objet (18) ; et
le contrôle de la tension appliquée sur la base de la température mesurée.

8. Procédé selon la revendication 7, dans lequel une caméra thermique (26) est utilisée pour mesurer la température.
